# EUROPÄISCHE PATENTANMELDUNG

(11) **EP 3 900 974 A1**
(43) Veröffentlichungstag der Anmeldung: **27.10.2021**
(21) Anmeldenummer: 20170294.1
(22) Anmeldetag: 20.04.2020
(51) Int. Cl.: B60L 53/14, B60L 53/65, B60L 53/66, H02J 7/00

(54) **LADEVORRICHTUNG UND VERFAHREN ZUM LADEN VON ELEKTRISCHEN GERÄTEN**

(71) Anmelder: Siemens Aktiengesellschaft, 80333 München (DE)
(72) Erfinder: Falk, Rainer, 85586 Poing (DE)

(57) **Zusammenfassung**

Ladevorrichtung und Verfahren zum Laden von elektrischen Geräten

Die Erfindung betrifft ein Verfahren und eine Ladevorrichtung zum sicheren Laden eines elektrischen Gerätes.

## Beschreibung

Die Erfindung bezieht sich auf eine Ladevorrichtung mit einem Überwachungsmodul und ein Verfahren zum Laden von elektrischen Geräten.

Aufgabe der Erfindung ist es, zu bestehenden Lösungen eine Alternative bereitzustellen.

Nachfolgend werden Aspekte der Erfindung erläutert.

Gemäß einem ersten Aspekt betrifft die Erfindung eine Ladevorrichtung für elektrische Geräte, beispielsweise elektrische Fahrzeuge, aufweisend:
- eine Ladeschnittstelle, wobei die Ladeschnittstelle dazu eingerichtet ist, mit einer Ladekabelverbindung verbunden zu werden;
- ein Profilmodul, wobei das Profilmodul dazu eingerichtet ist, vorgegebene Verbindungseigenschaften für eine gültige Ladekabelverbindung zu speichern;
- ein Erfassungsmodul, wobei das Erfassungsmodul dazu eingerichtet ist, für eine verbundene Ladekabelverbindung anliegende Verbindungseigenschaften zu erfassen;
- ein Prüfmodul, wobei das Prüfmodul dazu eingerichtet ist, ein Prüfergebnis anhand der vorgegebenen Verbindungseigenschaften und der anliegenden Verbindungseigenschaften zu ermitteln;
- ein Freigabemodul, wobei das Freigabemodul dazu eingerichtet ist, anhand des Prüfergebnisses mittels Steuerbefehlen (die Steuerbefehle können beispielsweise auch ein Steuersignal sein oder ein Steuersignal kodiert die Steuerbefehle) eine Datenkommunikation der Ladevorrichtung mit dem elektrischen Gerät zu steuern und/oder einen elektrischen Ladevorgang mit dem elektrischen Gerät zu steuern.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor oder programmierbaren Prozessor, kann im Zusammenhang mit der Erfindung beispielsweise eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem "Modul" kann im Zusammenhang mit der Erfindung beispielsweise eine Schaltung des programmierbaren Prozessors und/oder ein Speicher des programmierbaren Prozessors zum Speichern von Programmbefehlen verstanden werden. Beispielsweise ist die Schaltung speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder zu realisieren.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einem Speicher gespeichert ist) verstanden werden.

Die Erfindung ist dahingehend vorteilhaft, um beispielsweise Angriffe auf die Implementierung der Ladekommunikation zu erschweren. Dabei wird beispielsweise das Ausnutzen von Schwachstellen verhindert.

Bei weiteren Ausführungsformen der Ladevorrichtung sind die Verbindungseigenschaften, insbesondere die vorgegebenen Verbindungseigenschaften und/oder die anliegenden Verbindungseigenschaften, Eigenschaften einer Ladekabelverbindung, insbesondere einer gültigen Ladekabelverbindung und/oder einer anliegenden Ladekabelverbindung, wobei die Eigenschaften beispielsweise ein Widerstand, eine Impedanz, Isolationseigenschaften der Ladekabelverbindung, Ergebnisse einer Messung eines Time Domain Reflectometer oder eine Kombination der genannten Eigenschaften sind. Alternativ oder zusätzlich sind die Eigenschaften insbesondere elektrische Eigenschaften der Ladekabelverbindung, wobei die Verbindungseigenschaften und/oder die elektrischen Eigenschaften beispielsweise entsprechende Eigenschaften für Kategorien von Leitungen des Ladekabels umfassen. Die Kategorien können insbesondere Kategorien für Leitungen, wie beispielsweise Leitungen für Stromübertragung/Energieübertragung oder Leitungen zur Datenkommunikation, sein.

Bei weiteren Ausführungsformen der Ladevorrichtung umfasst eine Ladestation für das elektrische Gerät die Ladevorrichtung. Alternativ oder zusätzlich umfasst das elektrische Gerät die Ladevorrichtung. Alternativ oder zusätzlich umfasst ein Steckerelement eines Ladekabels die Ladevorrichtung.

Bei weiteren Ausführungsformen der Ladevorrichtung, umfasst das Prüfmodul ein Überwachungsmodul, beispielsweise ein Network Intrusion Detection System, wobei die Verbindungseigenschaften, insbesondere die vorgegebenen Verbindungseigenschaften und/oder die anliegenden Verbindungseigenschaften, Ladekommunikationseigenschaften einer Ladekommunikation einer entsprechenden Ladekabelverbindung umfassen.

Bei weiteren Ausführungsformen der Ladevorrichtung umfasst das Überwachungsmodul ein Ladekommunikationsprüfergebnis einer Plausibilitätsprüfung der Ladekommunikation.

Bei weiteren Ausführungsformen der Ladevorrichtung werden abhängig vom Ladekommunikationsprüfergebnis Ladekommunikationssteuerbefehle bereitgestellt, wobei beispielsweise die Ladekommunikationssteuerbefehle einen Neustart und/oder ein Ausschalten der Ladevorrichtung und/oder des elektrischen Gerätes steuern.

Bei weiteren Ausführungsformen der Ladevorrichtung umfassen die Steuerbefehle die Ladekommunikationssteuerbefehle oder die Ladekommunikationssteuerbefehle sind die Steuerbefehle, wobei das Prüfergebnis das Ladekommunikationsprüfergebnis umfasst oder das Ladekommunikationsprüfergebnis ist. Ein Steuerbefehl kann beispielsweise ein Steuersignal oder ein Steuerkommando sein.

Bei weiteren Ausführungsformen der Ladevorrichtung erfolgt die Prüfung der Verbindungseigenschaften bei einem Verbinden der Ladekabelverbindung mit der Ladevorrichtung und/oder bei einem Initialisieren des Ladevorgangs und/oder während des Ladevorgangs des elektrischen Gerätes. Hier bedeutet "Initialisiert" insbesondere, dass die Ladevorrichtung (z. B. eine Ladestation, welche die Ladevorrichtung umfasst) und das elektrische Gerät (z. B. ein Fahrzeug) schon verbunden sind und kommunizieren, aber z. B. noch keine Energieübertragung erfolgt.

Bei weiteren Ausführungsformen der Ladevorrichtung erfolgt die Prüfung der anliegenden Verbindungseigenschaften hinsichtlich der elektrischen Eigenschaften beim Verbinden der Ladekabelverbindung und/oder die Prüfung der Ladekommunikationseigenschaften erfolgt beim Verbinden der Ladekabelverbindung durch das Überwachungsmodul mit der Ladevorrichtung erfolgt und/oder bei einem Initialisieren des Ladevorgangs und/oder während des Ladevorgangs des elektrischen Gerätes.

Gemäß einem weiteren Aspekt betrifft die Erfindung ein computerimplementiertes Verfahren zum Steuern eines Ladeprozesses eines elektrischen Gerätes mit folgenden Verfahrensschritten:
- Speichern von vorgegebenen Verbindungseigenschaften für eine gültige Ladekabelverbindung;
- Erfassen von anliegenden Verbindungseigenschaften für eine verbundene Ladekabelverbindung;
- Ermitteln eines Prüfergebnisses anhand der vorgegebenen Verbindungseigenschaften und der anliegenden Verbindungseigenschaften;
- Steuern einer Datenkommunikation mit dem elektrischen Gerät und/oder eines elektrischen Ladevorgangs mit dem elektrischen Gerät anhand des Prüfergebnisses mittels Steuerbefehle.

Bei weiteren Ausführungsformen des Verfahrens umfasst das Verfahren weitere Verfahrensschritte oder Merkmale, um die funktionalen Merkmale der Ladevorrichtung oder um weitere Merkmale der Ladevorrichtung bzw. deren Ausführungsformen zu realisieren.

Des Weiteren wird ein Computerprogrammprodukt mit Programmbefehlen zur Durchführung des genannten erfindungsgemäßen Verfahrens beansprucht, wobei mittels des Computerprogrammprodukts das erfindungsgemäße Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder eine zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Ladevorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Ladevorrichtung erstellt.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich, und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne, dass dies expliziert in dem jeweiligen Ausführungsbeispiel genannt sein muss.

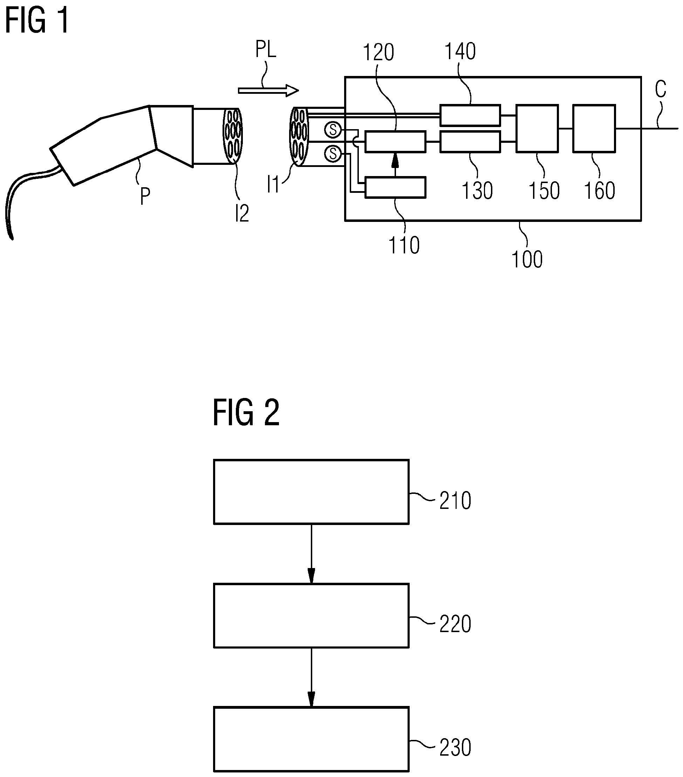

Fig. 1 zeigt eine schematische Darstellung der Ladevorrichtung 100. Die Ladevorrichtung 100 kann dabei beispielsweise eine Ladestation/Ladesäule für ein elektrisches Gerät sein oder eine Ladestation/Ladesäule umfasst die Ladevorrichtung für ein elektrisches Gerät. Das elektrische Gerät kann dabei beispielsweise ein elektrisches Fahrzeug (z. B. als eCar oder E-Car bezeichnet) sein.

Die Ladevorrichtung 100 umfasst zumindest eine erste Ladeschnittstelle I1, ein Profilmodul 110, ein Erfassungsmodul, ein Prüfmodul 120 und ein Freigabemodul 130, die vorzugsweise über einen Bus (z. B. einen Kommunikationsbus) kommunikativ miteinander verbunden sind. Optional umfasst die Ladevorrichtung ein Überwachungsmodul (z. B. ein Network Intrusion Detection System) und/oder ein Steuermodul 150 und/oder eine Kommunikationsschnittstelle 160 (z. B. ein Modem oder ein 5G Modul) und/oder eine Ladeelektronik 140, wobei die Kommunikationsschnittstelle 160 beispielsweise eine Kommunikationsverbindung C mit einem Backend aufbaut, um z. B. den Nutzer des elektrischen Gerätes zu authentifizieren und/oder für Abrechnungszwecke des Ladevorgangs.

Die erste Ladeschnittstelle I1 ist dazu eingerichtet mit einer Ladekabelverbindung P eines Ladekabels verbunden zu werden. Die Ladekabelverbindung umfasst zumindest eine zweite Ladekabelschnittstelle I2, die mit der ersten Ladeschnittstelle I1 verbunden werden kann (PL). Die andere Seite des Ladekabels ist mit dem zu ladenden elektrischen Gerät verbunden.

Das Profilmodul 110 ist dazu eingerichtet, vorgegebene Verbindungseigenschaften für eine gültige Ladekabelverbindung zu speichern.

Das Erfassungsmodul ist dazu eingerichtet für eine verbundene Ladekabelverbindung anliegende Verbindungseigenschaften zu erfassen bzw. zu messen. Beispielsweise kann das Erfassungsmodul im Profilmodul 110 integriert sein oder als separates Modul realisiert sein. Das Erfassungsmodul umfasst zum Erfassen der anliegenden Verbindungseigenschaften Sensoren S oder ist zum Erfassen der Verbindungseigenschaften mit den Sensoren S verbunden.

Die Verbindungseigenschaften (z. B. die vorgegebenen Verbindungseigenschaften und/oder die anliegenden Verbindungseigenschaften) sind dabei beispielsweise Eigenschaften einer Ladekabelverbindung, wobei eine entsprechende Ladekabelverbindung eine gültige Ladekabelverbindung und/oder eine anliegende Ladekabelverbindung ist. Die Eigenschaften sind beispielsweise ein (vorgegebener/gemessener) Widerstand, eine (vorgegebene/gemessene) Impedanz, (vorgegebene/gemessene) Isolationseigenschaften der Ladekabelverbindung, vorgegeben/gemessene Werte eines Time Domain Reflectometer oder eine Kombination der genannten Eigenschaften. Die Eigenschaften können somit also insbesondere elektrische Eigenschaften der Ladekabelverbindung P sein.

Alternativ oder zusätzlich sind die Eigenschaften insbesondere elektrische Eigenschaften der Ladekabelverbindung. Die Verbindungseigenschaften und/oder die elektrischen Eigenschaften können beispielsweise entsprechende Eigenschaften für Kategorien von Leitungen des Ladekabels umfassen. Die Kategorien können insbesondere Kategorien für Leitungen wie beispielsweise Leitungen für Stromübertragung/Energieübertragung oder Leitungen zur Datenkommunikation sein.

Das Prüfmodul 120 ist eingerichtet, ein Prüfergebnis anhand der vorgegebenen Verbindungseigenschaften und der anliegenden Verbindungseigenschaften zu ermitteln.

Das Freigabemodul 130 ist dazu eingerichtet, anhand des Prüfergebnisses mittels Steuerbefehle eine Datenkommunikation der Ladevorrichtung mit dem elektrischen Gerät zu steuern und/oder einen elektrischen Ladevorgang mit dem elektrischen Gerät zu steuern. Insbesondere kann z. B. das Freigabemodul eine Verbindung für die Datenkommunikation über das Ladekabel beziehungsweise über eine Schnittstelle (Stecker oder Buchse) der Ladesäule zum Verbinden eines Ladekabels elektrisch und oder logisch blockieren. Die Verbindung für die Datenkommunikation kann beispielsweise für die Übertragung von Ethernet-Frames und/oder von IP-Datenpaketen vorgesehen sein. Diese Verbindung kann abhängig vom Prüfergebnis elektrisch unterbrochen werden, oder es kann die Übertragung oder die Bearbeitung von Ethernet-Frames oder IP-Datenpaketen blockiert werden. Dadurch kann erreicht werden, dass die Implementierung eines Netzwerkprotokollstacks auf der Ladesäule, die grundsätzlich Schwachstellen aufweisen kann, nur dann von außen erreichbar ist, wenn das Prüfergebnis anzeigt, dass die Verbindungseigenschaften der Ladekabelverbindung zulässig sind. Somit wird insbesondere verhindert, dass die Implementierung des Netzwerkprotokollstacks auf der Ladesäule angegriffen werden kann, ohne dass eine insgesamt zulässige Ladekabelverbindung besteht. Dadurch wird der Aufwand für die praktische Durchführung von Angriffen erhöht und somit der Schutz vor solchen Angriffen verbessert.

Die Ladeelektronik 140 ist z. B. dazu eingerichtet, den Ladestrom für das elektrische Gerät bereitzustellen, sofern die Ladeelektronik hierzu z. B. durch das Steuermodul entsprechend angesteuert wird.

Das Steuermodul 150 ist z. B. dazu eingerichtet, das elektrische Laden zu steuern - z. B. zu erlauben, sofern dies beispielsweise durch entsprechende Steuerbefehle des Freigabemodul 130 zugelassen wird.

Das Prüfmodul 120 umfasst in einer Variante ein Überwachungsmodul, beispielsweise ein Network Intrusion Detection System oder eine Firewall, wobei die Verbindungseigenschaften, insbesondere die vorgegebenen Verbindungseigenschaften und/oder die anliegenden Verbindungseigenschaften, Ladekommunikationseigenschaften einer Ladekommunikation einer entsprechenden Ladekabelverbindung umfassen.

Auch kann die Ladevorrichtung eine separate Firewall umfassen, die z. B. eine Filterung (z. B. durch eine Firewall-Policy) der Ladekommunikation, bzw. eine Datenkommunikation abhängig von Prüfergebnis bzw. der Steuerbefehle, durchführt.

In einer weiteren Variante umfasst das Überwachungsmodul ein Ladekommunikationsprüfergebnis einer Plausibilitätsprüfung der Ladekommunikation.

In einer weiteren Variante werden abhängig vom Ladekommunikationsprüfergebnis Ladekommunikationssteuerbefehle bereitgestellt, wobei beispielsweise die Ladekommunikationssteuerbefehle einen Neustart und/oder ein Ausschalten der Ladevorrichtung und/oder des elektrischen Gerätes steuern.

In einer weiteren Variante umfassen die Steuerbefehle die Ladekommunikationssteuerbefehle oder die Ladekommunikationssteuerbefehle sind die Steuerbefehle, wobei das Prüfergebnis beispielswiese das Ladekommunikationsprüfergebnis umfasst oder das Ladekommunikationsprüfergebnis ist.

Mit der Erfindung können beispielsweise die elektrischen Eigenschaften der Ladekabelverbindung überprüft und/oder plausibilisiert werden (z.B. Messung Widerstand, Impedanz, Isolationsprüfung, Time Domain Reflectometer). Aber nur, wenn die erfassten bzw. gemessenen Eigenschaften der anliegenden Verbindungseigenschaften der Ladekabelverbindung plausibel sind, d.h. wenn es plausibel ist, dass z. B. tatsächlich ein Elektro-Fahrzeug über ein Ladekabel verbunden ist und nicht nur eine Ladekommunikation (z. B. eine Datenkommunikationsübertragung) alleine erfolgt, wird die Datenschnittstelle bzw. die Datenübertragung aktiviert bzw. freigegeben. Plausibel bedeutet dabei beispielsweise, dass die anliegenden Verbindungseigenschaften den vorgegeben Verbindungseigenschaften entsprechen. Hierbei kann ggf. ein vorgegebener Toleranzwert berücksichtigt werden. Sofern der Toleranzwert eingehalten wird, wird die Ladekabelverbindung als plausibel erachtet. Diese Überprüfung erfolgt beispielsweise beim Ermitteln des Prüfergebnisses, wobei bei einem Bestätigen der Plausibilität durch das Prüfergebnis mittels der Steuerbefehle die Datenschnittstelle bzw. die Datenübertragung aktiviert bzw. freigegeben wird.

Alternativ oder zusätzlich kann mittels des Prüfmoduls oder der separaten Firewall eine Filterung (z. B. durch eine Firewall-Policy) der Ladekommunikation (z. B. eine Datenkommunikation) abhängig von den ermittelten elektrischen/physikalischen Eigenschaften der Ladekabelverbindung durchgeführt werden. Dazu kann eine Vorrichtung zur Filterung der Datenkommunikation zwischen Ladeschnittstelle (Stecker, Buchse) der Ladesäule und dem Steuermodul, beispielsweise einem Ladecontroller, vorgesehen werden, die abhängig von dem Prüfergebnis des Prüfmodules eine erste Filterpolicy oder eine zweite Filterpolicy aktiviert. Diese Vorrichtung kann in einer Variante in das Prüfmodul integriert sein. Weiterhin ist es zusätzlich oder alternativ möglich, an der internen Schnittstelle zwischen Steuermodul und Ladeelektronik der Ladesäule eine Vorrichtung zur Filterung oder Blockierung (Unterbrechung) von Steuerbefehlen oder Steuersignalen zwischen dem Steuermodul und der Ladeelektronik vorzusehen. Dadurch kann erreicht werden, dass ein Steuermodul, das tatsächlich oder möglicherweise durch Ausnutzen von in der Netzwerkprotokollstack-Implementierung vorhandenen Schwachstellen manipuliert ist, auf die verbundene Ladeelektronik nur noch eingeschränkt oder gar nicht mehr einwirken kann. So kann z.B. eine maximal aktivierbare Ladeleistung, Ladestrom, Ladespannung beschränkt werden. Unabhängig von der Software, die auf dem Steuermodul ausgeführt wird, ist somit nur noch eine eingeschränkte Energieübertragung durch die Ladeelektronik möglich. In einer weiteren Variante stellt die Prüfvorrichtung der Ladeelektronik Signale zur Freigabe bestimmter Ladeparameterbreiche bereit. Auch auf diese Art kann z.B. eine maximal aktivierbare Ladeleistung, Ladestrom, Ladespannung unabhängig von der Software, die auf dem Steuermodul ausgeführt wird, beschränkt werden.

Dadurch werden z. B. logische Angriffe gegen die Ladeschnittstelle bzw. deren Implementierung erschwert, da z. B. die Kommunikationsschnittstelle nur abhängig von elektrischen Eigenschaften (z. B. die anliegenden Verbindungseigenschaften) der Ladeschnittstelle zugreifbar ist. Daher müsste ein Angreifer die Ladeschnittstelle komplett nachbilden, einschließlich der elektrischen Eigenschaften, um einen Security-Angriff auf die Ladekommunikation durchführen zu können. Weiterhin können Auswirkungen erfolgreicher logischer Angriffe beschränkt werden.

Alternativ oder zusätzlich kann der Ladevorgang plausibilisiert werden. Hierzu kann das Überwachungsmodul zusätzlich ein Network Intrusion Detection System (NIDS) umfassen, um die Ladekommunikation zu analysieren. Dazu kann die Ladekommunikation durch ein Network Intrusion Detection System (NIDS) analysieren bzw. zu prüfen. Mit dem Network Intrusion Detection System kann die erfolgte Energieübertragung z. B. plausibilisiert werden und hierfür z. B. ein Ladekommunikationsprüfergebnis ermittelt werden.

Wenn ein Ladevorgang unplausibel ist (z.B. keine vollständige reguläre Lade-Kommunikationssitzung, keine Energieabgabe), so kann mittels der Steuerbefehle und dem Ladekommunikationsprüfergebnis bzw. dem Prüfergebnis unmittelbar (noch vor Beendigung des Ladevorgangs) oder unabhängig von einer Heuristik immer ein Neustart erfolgen. Dadurch können z. B. einfache Angriffsszenarien gezielt erkannt werden, bei denen z.B. nur eine Netzwerkverbindung von einem Angreifer aufgebaut wird, aber ohne die zum Laden erforderliche Ladeelektronik des elektrischen Gerätes mit der Ladesäule verbunden zu haben.

Das Ausführungsbeispiel von Fig. 1 zeigt dabei beispielsweise einen Steckverbinder (erste Ladeschnittstelle I1 und zweite Ladeschnittstelle L1), der mit der Ladevorrichtung (z. B. eine Ladesäule) verbunden ist. Die Ladevorrichtung umfasst beispielsweise zwei Sensoren S, um die elektrischen Eigenschaften (z. B. anliegende Verbindungseigenschaften) eines angesteckten Ladekabels zu ermitteln. Dies kann z. B. auch als Ladekabel-Fingerprint bezeichnet werden.

Die Verbindungseigenschaften (z. B. die vorgegebenen oder anliegenden Verbindungseigenschaften) können durch das Ladekabel selbst und/oder durch das verbundene Elektrofahrzeug (bzw. dessen Batterieladegerät) bestimmt bzw. charakterisiert sein.

Es wird dann z. B. durch das Prüfmodul überprüft, ob das angesteckte Ladekabel und/oder die darüber verbundene Ladeelektronik des Fahrzeugs plausible elektrische Eigenschaften aufweist. Dadurch kann insbesondere erkannt werden, ob tatsächlich ein reguläres Ladekabel verwendet wird und ob tatsächlich sich ein Elektrofahrzeug mit entsprechender Batterieladeelektronik elektrisch verbunden ist. Dieser Fall kann insbesondere davon unterschieden werden, dass lediglich eine Datenkommunikation allein stattfindet bzw. verbunden ist.

Eine Firewall filtert z. B. den Datenverkehr der Ladekommunikationssteuerung zwischen dem elektrischen Gerät (z. B. ein elektrisches Fahrzeug) und der Ladevorrichtung (z. B. eine Ladesäule). Diese sperrt die Datenkommunikation oder filtert sie restriktiv, wenn kein plausibles Fahrzeug elektrisch zum Laden verbunden ist. Die Funktionsweise, bzw. das Funktionsverhalten der Firewall, werden dabei vorzugsweise durch die Steuerbefehle festgelegt.

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen betrifft dieses Ausführungsbeispiel ein Verfahren zum rechnergestützten oder computerimplementierten Steuern eines Ladeprozesses eines elektrischen Gerätes.

Das Verfahren umfasst einen ersten Verfahrensschritt 210 zum Speichern von vorgegebenen Verbindungseigenschaften für eine gültige Ladekabelverbindung.

Das Verfahren umfasst einen zweiten Verfahrensschritt 220 zum Erfassen von anliegenden Verbindungseigenschaften für eine verbundene Ladekabelverbindung.

Das Verfahren umfasst einen dritten Verfahrensschritt 230 zum Ermitteln eines Prüfergebnisses anhand der vorgegebenen Verbindungseigenschaften und der anliegenden Verbindungseigenschaften.

Das Verfahren umfasst einen vierten Verfahrensschritt 240 zum Steuern einer Datenkommunikation mit dem elektrischen Gerät und/oder eines elektrischen Ladevorgangs mit dem elektrischen Gerät anhand des Prüfergebnisses mittels Steuerbefehle.

Die Erfindung betrifft ein Verfahren und eine Ladevorrichtung zum sicheren Laden eines elektrischen Gerätes.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Ladevorrichtung für elektrische Geräte, beispielsweise elektrische Fahrzeuge, aufweisend:
- eine Ladeschnittstelle, wobei die Ladeschnittstelle dazu eingerichtet ist, mit einer Ladekabelverbindung verbunden zu werden;
- ein Profilmodul, wobei das Profilmodul dazu eingerichtet ist, vorgegebene Verbindungseigenschaften für eine gültige Ladekabelverbindung zu speichern;
- ein Erfassungsmodul, wobei das Erfassungsmodul dazu eingerichtet ist, für eine verbundene Ladekabelverbindung anliegende Verbindungseigenschaften zu erfassen;
- ein Prüfmodul, wobei das Prüfmodul dazu eingerichtet ist, ein Prüfergebnis anhand der vorgegebenen Verbindungseigenschaften und der anliegenden Verbindungseigenschaften zu ermitteln;
- ein Freigabemodul, wobei das Freigabemodul dazu eingerichtet ist, anhand des Prüfergebnisses mittels Steuerbefehle eine Datenkommunikation der Ladevorrichtung mit dem elektrischen Gerät zu steuern und/oder einen elektrischen Ladevorgang mit dem elektrischen Gerät zu steuern.

2. Ladevorrichtung nach Anspruch 1, wobei
- die Verbindungseigenschaften, insbesondere die vorgegebenen Verbindungseigenschaften und/oder die anliegenden Verbindungseigenschaften, Eigenschaften einer Ladekabelverbindung, insbesondere einer gültigen Ladekabelverbindung und/oder einer anliegenden Ladekabelverbindung, sind,
- die Eigenschaften beispielsweise ein Widerstand, eine Impedanz, Isolationseigenschaften der Ladekabelverbindung, Ergebnisse einer Messung eines Time Domain Reflectometer oder eine Kombination der genannten Eigenschaften;
- die Eigenschaften insbesondere elektrische Eigenschaften der Ladekabelverbindung sind.

3. Ladevorrichtung nach einem der vorhergehenden Ansprüche, wobei
- eine Ladestation für das elektrische Gerät die Ladevorrichtung umfasst, und/oder
- das elektrische Gerät die Ladevorrichtung umfasst, und/oder
- ein Steckerelement eines Ladekabels die Ladevorrichtung umfasst.

4. Ladevorrichtung nach einem der vorhergehenden Ansprüche, wobei
- das Prüfmodul ein Überwachungsmodul, beispielsweise ein Network Intrusion Detection System, umfasst,
- die Verbindungseigenschaften, insbesondere die vorgegebenen Verbindungseigenschaften und/oder die anliegenden Verbindungseigenschaften, Ladekommunikationseigenschaften einer Ladekommunikation einer entsprechenden Ladekabelverbindung umfassen.

5. Ladevorrichtung nach Anspruch 4, wobei
- das Überwachungsmodul ein Ladekommunikationsprüfergebnis einer Plausibilitätsprüfung der Ladekommunikation umfasst.

6. Ladevorrichtung nach Anspruch 4 oder 5, wobei
- abhängig vom Ladekommunikationsprüfergebnis Ladekommunikationssteuerbefehle bereitgestellt werden,
- beispielsweise die Ladekommunikationssteuerbefehle einen Neustart und/oder ein Ausschalten der Ladevorrichtung und/oder des elektrischen Gerätes steuern.

7. Ladevorrichtung nach einem der vorhergehenden Ansprüche, wobei
- die Steuerbefehle die Ladekommunikationssteuerbefehle umfassen oder die Ladekommunikationssteuerbefehle sind,
- beispielsweise das Prüfergebnis das Ladekommunikationsprüfergebnis umfasst oder das Ladekommunikationsprüfergebnis ist.

8. Ladevorrichtung nach einem der vorhergehenden Ansprüche, wobei
- die Prüfung der Verbindungseigenschaften bei einem Verbinden der Ladekabelverbindung mit der Ladevorrichtung und/oder bei einem Initialisieren des Ladevorgangs und/oder während des Ladevorgangs des elektrischen Gerätes erfolgt.

9. Ladevorrichtung nach einem der vorhergehenden Ansprüche, wobei
- die Prüfung der anliegenden Verbindungseigenschaften hinsichtlich der elektrischen Eigenschaften beim Verbinden der Ladekabelverbindung erfolgt, und/oder
- die Prüfung der Ladekommunikationseigenschaften beim Verbinden der Ladekabelverbindung durch das Überwachungsmodul mit der Ladevorrichtung erfolgt und/oder bei einem Initialisieren des Ladevorgangs und/oder während des Ladevorgangs des elektrischen Gerätes erfolgt.

10. Computerimplementiertes Verfahren zum Steuern eines Ladeprozesses eines elektrischen Gerätes mit folgenden Verfahrensschritten:
- Speichern von vorgegebenen Verbindungseigenschaften für eine gültige Ladekabelverbindung;
- Erfassen von anliegende Verbindungseigenschaften für eine verbundene Ladekabelverbindung;
- Ermitteln eines Prüfergebnisses anhand der vorgegebenen Verbindungseigenschaften und der anliegenden Verbindungseigenschaften;
- Steuern einer Datenkommunikation mit dem elektrischen Gerät und/oder eines elektrischen Ladevorgangs mit dem elektrischen Gerät anhand des Prüfergebnisses mittels Steuerbefehle.

11. Computerprogrammprodukt mit Programmbefehlen zur Durchführung des Verfahrens nach Anspruch 10.

12. Computerprogrammprodukt mit Programmbefehlen für ein Erstellungsgerät zur Erstellung einer Halbleitervorrichtung nach einem der Ansprüche 1-9, wobei die Programmbefehle insbesodere das Erstellungsgerät derart konfigurieren, dass das Erstellungsgerät die Halbleitervorrichtung erstellt.

13. Bereitstellungsvorrichtung für das Computerprogrammprodukt nach Anspruch 11 und/oder 12, wobei die Bereitstellungsvorrichtung das Computerprogrammprodukt speichert und/oder bereitstellt.
